# EUROPEAN PATENT SPECIFICATION

(11) **EP 4 094 180 B1**
(45) Date of publication and mention of the grant of the patent: **28.10.2026**
(21) Application number: 20715016.0
(22) Date of filing: 25.03.2020
(51) Int. Cl.: G06V 10/44, G06V 20/40, G06V 10/25, G06V 10/60, G06V 20/10, G06T 7/11

(54) **DETERMINATION OF ILLUMINATION SECTIONS**
BESTIMMUNG VON BELEUCHTUNGSABSCHNITTEN
DÉTERMINATION DE SECTIONS D'ÉCLAIRAGE

(43) Date of publication of application: 30.11.2022
(73) Proprietor: Huawei Technologies Co., Ltd., Shenzhen, Guangdong 518129 (CN)
(72) Inventor: SALMELIN, Eero, 16440 Kista (SE); GULDOGAN, Esin, 16440 Kista (SE)
(74) Representative: Epping - Hermann - Fischer
(86) International application number: PCT/EP2020/058378
(87) International publication number: WO 2021/190745

(56) References cited:
- WO-A1-2019/145516
- US-A1- 2020 005 468
- GUILLERMO GALLEGO ET AL: "Event-based Vision: A Survey", IEEE TRANSACTIONS ON PATTERN ANALYSIS AND MACHINE INTELLIGENCE, 26 February 2020 (2020-02-26), pages 1 - 1, XP055754728, Retrieved from the Internet <URL:https://arxiv.org/pdf/1904.08405.pdf> [retrieved on 20201127], DOI: 10.1109/TPAMI.2020.3008413

## Description

### TECHNICAL FIELD

The disclosure relates to a device, and more particularly to a device comprising an optical camera sensor. Furthermore, the disclosure relates to corresponding methods and a computer program.

### BACKGROUND

Finding the illumination and determining multi-illumination can be important and challenging tasks for colour correction processing of images. If the illumination and real colour of an object are known, it may be possible to improve image quality.

For example, WO 2019/145516 A1 discloses event-camera processing detecting flickering frequency patterns from temporal luminance changes to identify and localize blinking light sources for machine-vision applications.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The scope of the invention is defined in the appended claims.

It is an object to provide a device and a method for illumination section determination. The object is achieved by the features of the independent claims. Further implementation forms are provided in the dependent claims, the description and the figures.

Many of the attendant features will be more readily appreciated as they become better understood by reference to the following detailed description considered in connection with the accompanying drawings.

### DESCRIPTION OF THE DRAWINGS

The present description will be better understood from the following detailed description read in light of the accompanying drawings, wherein:
Fig. 1 illustrates a schematic representation of a device according to an embodiment;
Fig. 2 illustrates a schematic representation of a computing unit according to an embodiment;
Fig. 3 illustrates a schematic representation of a DAVIS pixel according to an embodiment;
Fig. 4 illustrates a schematic representation of an image and of a flicker map according to an embodiment;
Fig. 5 illustrates a schematic representation of a segmented image according to an embodiment;
Fig. 6 illustrates a schematic representation of photocurrent signals according to an embodiment;
Fig. 7 illustrates a schematic representation of brightness signals according to an embodiment;
Fig. 8 illustrates a schematic representation of an event signal according to an embodiment;
Fig. 9 illustrates a schematic representation of an event differential signal according to an embodiment;
Fig. 10 illustrates a schematic representation of a noisy photocurrent signal and corresponding events according to an embodiment; and
Fig. 11 illustrates a flow chart representation of a method according to an embodiment.

Like references are used to designate like parts in the accompanying drawings.

### DETAILED DESCRIPTION

The detailed description provided below in connection with the appended drawings is intended as a description of the embodiments and is not intended to represent the only forms in which the embodiment may be constructed or utilized. However, the same or equivalent functions and structures may be accomplished by different embodiments.

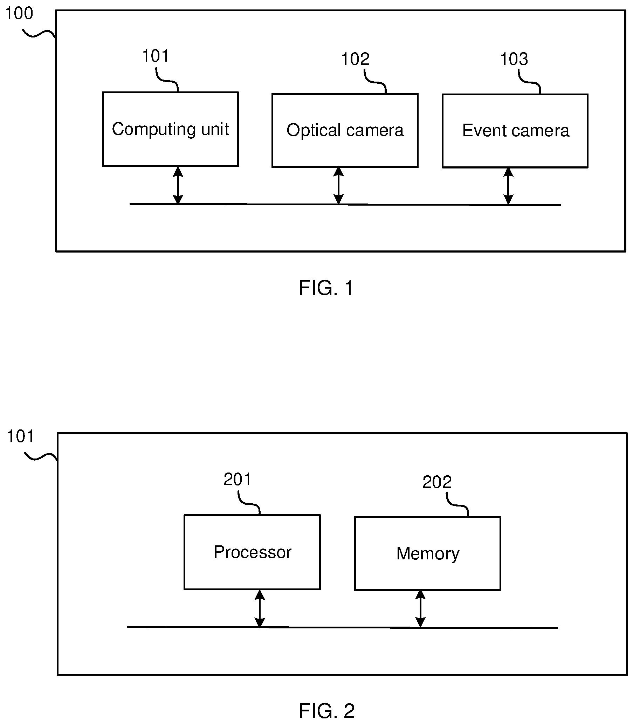

Fig. 1 illustrates a schematic representation of a device 100 according to an embodiment.

According to an embodiment, the device 100 comprises an optical camera sensor 102.

The optical camera sensor 102 may be configured to capture an image of a target area.

The optical camera sensor 102 may also be referred to as an optical camera, a camera, a camera sensor, or similar.

The optical camera sensor 102 may comprise a plurality of pixels.

The device 100 may further comprise an event camera sensor 103. The event camera 103 may be configured to detect one or more events in the target area. Each event of the one or more events may correspond to a temporal change of illuminance in a location within the target area.

The event camera sensor 103 may also be referred to as an event camera, a neuromorphic camera, a silicon retina, a dynamic vision sensor (DVS), or similar.

The event camera sensor 103 may comprise an imaging sensor that responds to local changes in brightness/illuminance. The event camera sensor 103 may comprise a plurality of pixels. Each pixel of an event camera sensor 103 may operate independently and asynchronously.

The event camera sensor 103 may comprise a temporal contrast sensor. A temporal contrast sensor may produce events that indicate polarity (increase or decrease in brightness). Alternatively or additionally, the event camera sensor 103 may comprise a temporal image sensor. A temporal image sensor may indicate the instantaneous intensity with each event. Alternatively or additionally, the event camera sensor 103 may comprise a dynamic and active-pixel vision sensor (DAVIS). A DAVIS may comprise a global shutter active pixel sensor (APS) in addition to the dynamic vision sensor that shares the same photosensor array.

The event camera sensor 103 may be configured to detect the one or more events in the target area asynchronously.

The device 100 may further comprise a computing unit 101. The computing unit 101 may be configured to determine a spatial distribution of one or more flickering frequencies in the target area based on the one or more events detected by the event sensor. The computing unit 101 may further be configured to segment the image into two or more sections based on the spatial distribution of the one or more flickering frequencies within the target area.

The computing unit 101 may analyse the events using various algorithms. For example, the computing unit 101 may use a machine learning/deep learning or any other approach, such as those disclosed herein, for detecting the flickering frequencies.

The optical camera sensor 102 and/or the event camera sensor 103 may be, for example, electrically coupled to the computing unit 101. For example, the aforementioned components 101 - 103 may be connected via a data bus. For example, the optical camera sensor 102 may provide the image to the computing unit 101 via the data bus and/or the event camera sensor 103 may provide the one or more events to the computing unit 101 via the data bus. Alternatively, the components 101 - 103 may be coupled in some other way, such as wirelessly.

The device 100 may also comprise other components and/or parts not illustrated in the embodiment of Fig. 1.

The device 100 may be configured to capture a video. The image may correspond to a frame of the video. The device 100 may be configured to perform any operations disclosed herein for each frame of the video.

The device 100 may be embodied in, for example, a camera, in mobile phone, in a tablet, or in a computer, such as a laptop computer.

Fig. 2 illustrates a schematic representation of a computing unit 101 according to an embodiment.

The computing unit 101 may comprise a processor 201. The computing unit 101 may further comprise a memory 202.

In some embodiments at least some parts of the device 100 may be implemented as a system on a chip (SoC). For example, the processor 201, the memory 202, and/or other components of computing unit 101 may be implemented using a field-programmable gate array (FPGA).

Components of the device 100, such as the processor 201 and the memory 202, may not be discrete components. For example, if the device 100 is implemented using a SoC, the components may correspond to different units of the SoC.

The processor 201 may comprise, for example, one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The memory 202 may be configured to store, for example, computer programs and the like. The memory 202 may include one or more volatile memory devices, one or more non-volatile memory devices, and/or a combination of one or more volatile memory devices and non-volatile memory devices. For example, the memory 202 may be embodied as magnetic storage devices (such as hard disk drives, floppy disks, magnetic tapes, etc.), optical magnetic storage devices, and semi-conductor memories (such as mask ROM, PROM (programmable ROM), EPROM (erasable PROM), flash ROM, RAM (random access memory), etc.).

Functionality described herein may be implemented via the various components of the device 100. For example, the memory 202 may comprise program code for performing any functionality disclosed herein, and the processor 201 may be configured to perform the functionality according to the program code comprised in the memory 202.

When the device 100 is configured to implement some functionality, some component and/or components of the device 100, such as the one or more processors 201 and/or the memory 202, may be configured to implement this functionality. Furthermore, when the one or more processors 201 is configured to implement some functionality, this functionality may be implemented using program code comprised, for example, in the memory 202. For example, if the device 100 is configured to perform an operation, the one or more memories 202 and the computer program code can be configured to, with the one or more processors 201, cause the device 100 to perform that operation.

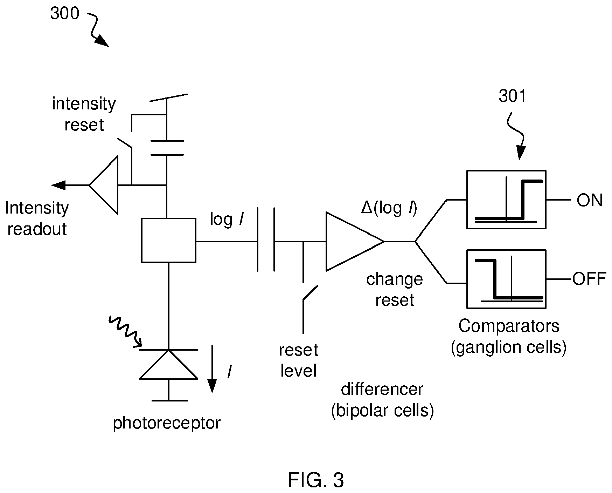

Fig. 3 illustrates a schematic representation of a DAVIS pixel 300 according to an embodiment.

The event camera sensor 103 may comprise, for example, a plurality of DAVIS pixels 300. Alternatively, the pixels of the event camera sensor 103 may be implemented in some other fashion.

The output of the event camera sensor 103 may comprise a variable data rate sequence of digital events. These events may be provided by, for example, the comparators 301 of the DAVIS pixel 300. Each event may represent a change of brightness (logarithm of intensity) of predefined magnitude at a pixel at a particular time.

Each pixel in the event camera sensor 103 can memorize the brightness each time it sends an event. Each pixel may then continuously monitor for a change of sufficient magnitude.

Herein, "brightness" may refer to the logarithm of light intensity. Light intensity may be measured as, for example, illuminance, radiant intensity, luminous intensity, or irradiance. When the change of brightness exceeds a threshold, the event camera sensor 103 can send an event. An event may comprise an (*x, y*) location of the event, a time *t* of the event, and a polarity p of the event. The polarity may be represented by a one-bit value. For example, if the change corresponds to an increase in brightness, the bit may be one, and if the change corresponds to a decrease in brightness, the bit may be zero, or vice versa.

The event camera sensor 103 may be configured to detect an event of the one or more events in response to a temporal change of illuminance being greater than a preconfigured temporal contrast threshold in the location of the event.

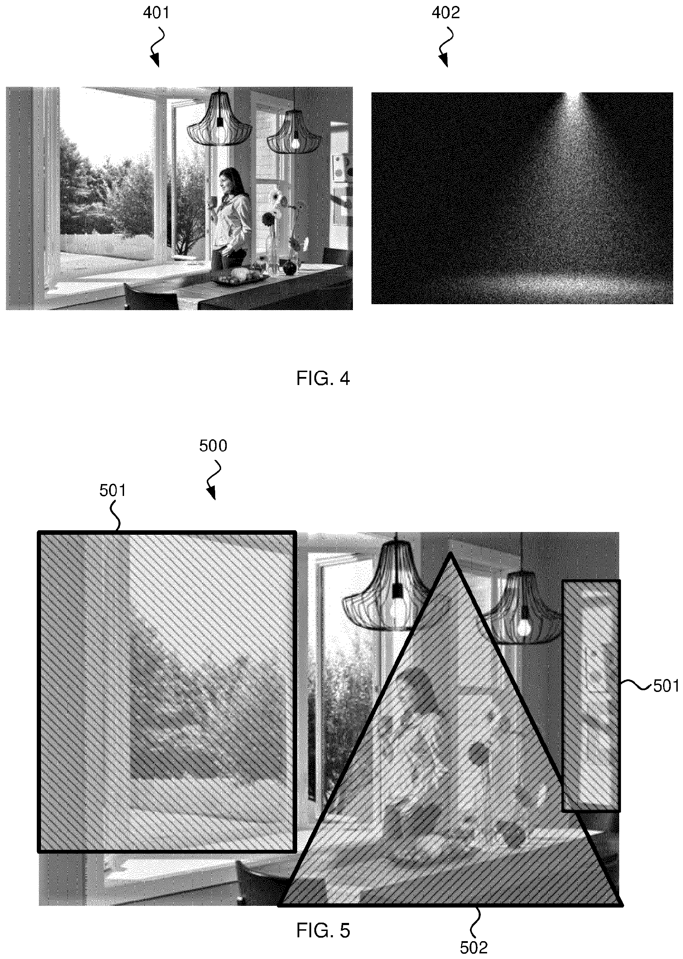

Fig. 4 illustrates a schematic representation of an image 401 and of a flicker map 402 according to an embodiment.

The flicker map 402 may correspond to the target area of the image 401. The image may be obtained from the optical camera sensor 102. The flicker map 402 may be obtained based on the events from the event camera sensor 103.

Artificial light sources, such as LEDs and fluorescent lamps, produce light as periodic signals. Thus, when the light is observed using the event camera sensor 103, the intensity of the light has certain periodicity, meaning that it has a flickering frequency. Different light sources may have different flickering frequencies. Thus, by determining the flickering frequency, the type of the light source may be determined. Daylight does not have a periodic signal and does therefore not flicker.

The computing unit 101 may determine the illumination source types in the area of the image 401 based on their flickering frequency.

For example, in the embodiment of Fig. 4, the artificial light in the area of the image 401 can be observed as flickering in the flicker map 402. The flicker map 402 may indicate which parts of the target area are under flickering/artificial illumination.

The image 401 illustrated in the embodiment of Fig. 4 comprises multiple illumination sources, such as sunlight and artificial light. The artificial light may be due to, for example, LEDs. Based on the flicker map 402, locations within the image 401 that are under specific illumination can be detected.

Fig. 5 illustrates a schematic representation of a segmented image 500 according to an embodiment.

The segmented image 500 illustrated in the embodiment of Fig. 5 may correspond to the image 401 illustrated in the embodiment of Fig. 4.

In the embodiment of Fig. 5, the image has been segmented into three sections. Two of the sections 501 correspond to natural light illumination and one section 502 corresponds to artificial light illumination. As can be seen by comparing the segmented image 500 to the flicker map 402 of the embodiment of Fig. 4, the section under artificial light illumination 502 corresponds to the flickering section of the flicker map 402.

The computing unit 101 may be further configured to determine one or more lighting source types in the target area and a location of the one or more lighting source types based on the one or more flickering frequencies and segment the image into the two or more sections based on the one or more determined lighting source types.

The computing unit 101 may be configured to determine the one or more lighting source types in the target area based on the one or more flickering frequencies by comparing the one or more flickering frequencies to one or more preconfigured frequency values.

The memory 202 may, for example, comprise the one or more preconfigured frequency values. The one or more preconfigured frequency values may comprise, for example, one or more known flickering frequencies of certain type of lighting source types, such as LEDs or fluorescent lights.

The device 100 may further comprise a memory 202 coupled to the computing unit 101. The computing unit 101 may be further configured to store the image and information indicating the segmentation of the image into the memory 202. The image and the information indicating the segmentation of the image may be stored into, for example, a single file. The file can be later used for, for example, colour correction of the image.

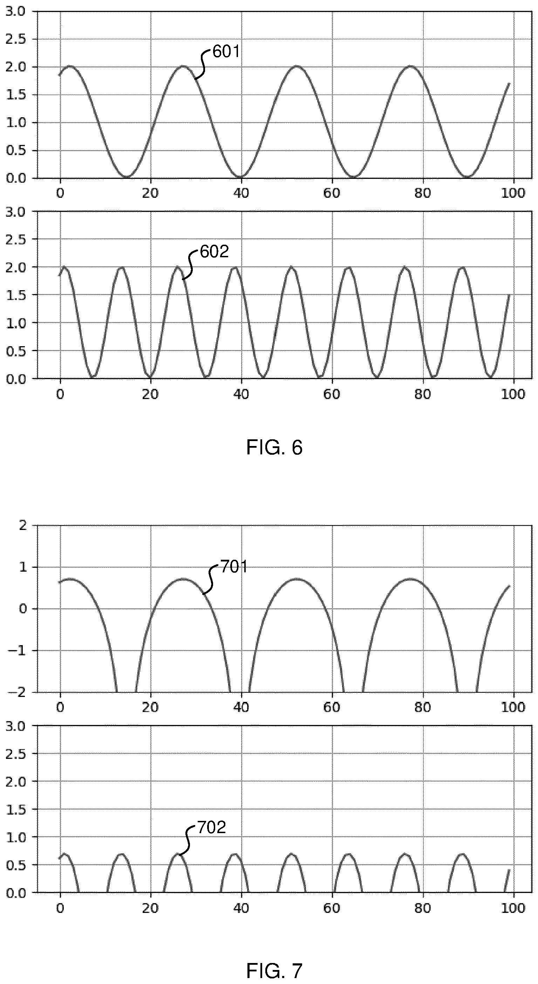

Fig. 6 illustrates a schematic representation of photocurrent signals according to an embodiment.

The embodiment of Fig. 6 illustrates a first photocurrent signal 601 and a second photocurrent signal 602. The photocurrent signals 601, 602 may correspond to a photocurrent in a pixel of the event camera sensor 103. The photocurrent signal may be proportional to the light intensity incident onto the photodetector.

In the example embodiment of Fig. 6, the flickering frequency of the first photocurrent signal 601 is greater than the flickering frequency of the second photocurrent signal 602. The first 601 and second photocurrent signal 602 may be substantially sinusoidal. The photocurrent signals 601, 602 may correspond to, for example, artificial lighting, such as fluorescent lights or LED lights.

Fluorescent lights may have a flickering frequency of approximately 120 Hertz (Hz). Flickering of LED lights may be more noticeable due to the fact that LED lights may flicker between less than 10% and 100% of maximum brightness, whereas fluorescent lights may dim to approximately 35% and back to 100%.

The pixels of the event camera sensor 103 may have a finite bandwidth. If the incident light intensity varies too quickly, the front end photoreceptor circuits may filter out the variations. The rise and fall time that is analogous to the exposure time in standard image sensors is the reciprocal of this bandwidth. Above some cut-off frequency, the variations may be filtered out by the photoreceptor dynamics and the number of events per cycle may drop. This cut-off frequency may be a monotonically increasing function of light intensity. At the brighter light intensity, the DVS pixel bandwidth may be approximately 3 kHz, equivalent to an exposure time of about 300 microseconds (µs). At 1000 times lower intensity, the DVS bandwidth may be reduced to about 300 Hz.

Fig. 7 illustrates a schematic representation of brightness signals according to an embodiment.

The embodiment of Fig. 7 illustrates a first brightness signal 701 and a second brightness signal 702. The first brightness signal 701 may correspond to the first photocurrent signal 601 illustrated in the embodiment of Fig. 6. The second brightness signal 702 may correspond to the second photocurrent signal 602 illustrated in the embodiment of Fig. 6.

Brightness may be proportional to the logarithm of the photocurrent / light intensity.

Since the light intensity and the photocurrent of a light source is a positive valued periodic function, the logarithm of the function will be also positive valued periodic function:$log \left(f\left(x\right)\right) = log \left(A sin\left(Bx\right)+C\right) .$

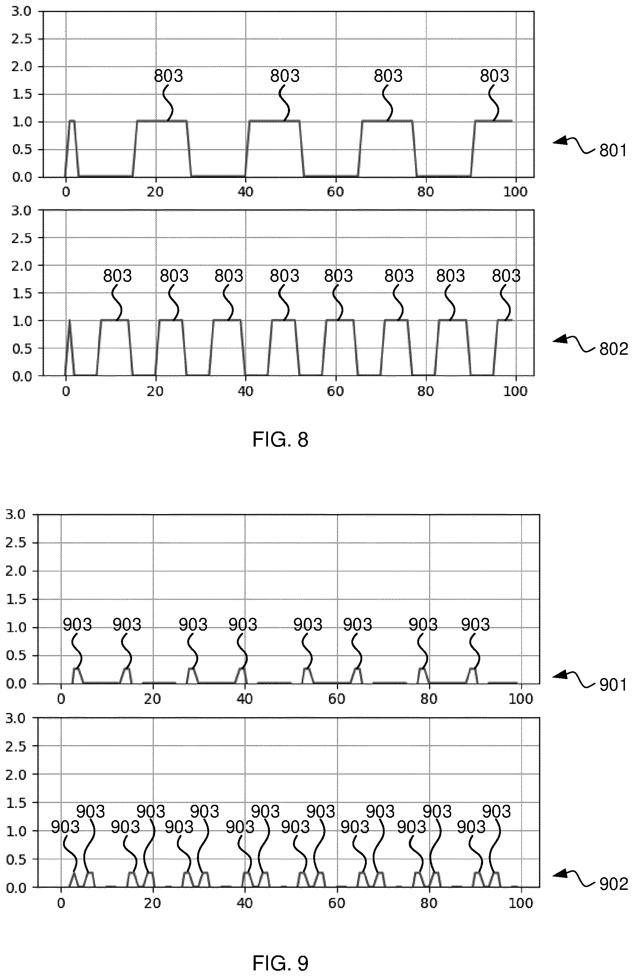

Fig. 8 illustrates a schematic representation of event signals according to an embodiment.

The embodiment of Fig. 8 illustrates a first event signal 801 and a second event signal 802. The first event signal 801 may correspond to the first brightness signal 701 illustrated in the embodiment of Fig. 7. The second event signal 802 may correspond to the second brightness signal 702 illustrated in the embodiment of Fig. 7.

In a noise-free case, an event *eₖ =* (*zₖ, tₖ, pₖ*) may be triggered at pixel *zₖ =* (*xₖ, yₖ*) and at time *tₖ* in response to the brightness increment since the last event at the pixel Δ*L = L*(*zₖ, tₖ*) *- L*(*zₖ, tₖ -* Δ*tₖ*) reaches a temporal contrast threshold *C. C* may be positive for or negative. Alternatively, the absolute value of Δ*L* may be compared to C. *pₖ* indicates the polarity of the event. Δ*tₖ* is the time elapsed since the last event at the same pixel *zₖ.* The first event signal 801 and the second event signal 802 comprise events 803. Each event 803 may correspond to a time interval during which change of brightness of the corresponding brightness signal 701, 702 reaches the temporal contrast threshold C.

According to an embodiment, the computing unit 101 is configured to determine the one or more flickering frequencies based on an event signal obtained from the event camera sensor 103. The event signal may comprise the one or more events.

Since the temporal distribution of events 803 may be proportional to the flickering frequency of the brightness signal 701, 702, the flickering frequency of the brightness signal 701, 702 may be deduced form the event signal 801, 802.

Fig. 9 illustrates a schematic representation of event differential signals according to an embodiment.

The embodiment of Fig. 9 illustrates a first event differential signal 901 and a second event differential signal 902. The first event differential signal 901 may correspond to the first event signal 801 illustrated in the embodiment of Fig. 8. The second event differential signal 902 may correspond to the second event signal 802 illustrated in the embodiment of Fig. 8. The first event differential signal 901 may be obtained by differentiating the first event signal 801. The second event differential signal 902 may be obtained by differentiating the second event signal 802.

The event differential signals 901, 902 comprise peaks 903. One or more of the peaks 903 may correspond to an event 803. Thus, the computing unit 101 may calculate the flickering frequency of the brightness signals 701, 702 based on the temporal distribution of the peaks 903 in the event differential signal 901, 902.

According to an embodiment, the computing unit 101 is configured obtain an event differential signal by differentiating the event signal. The computing unit 101 may determine the one or more flickering frequencies based on an event differential signal.

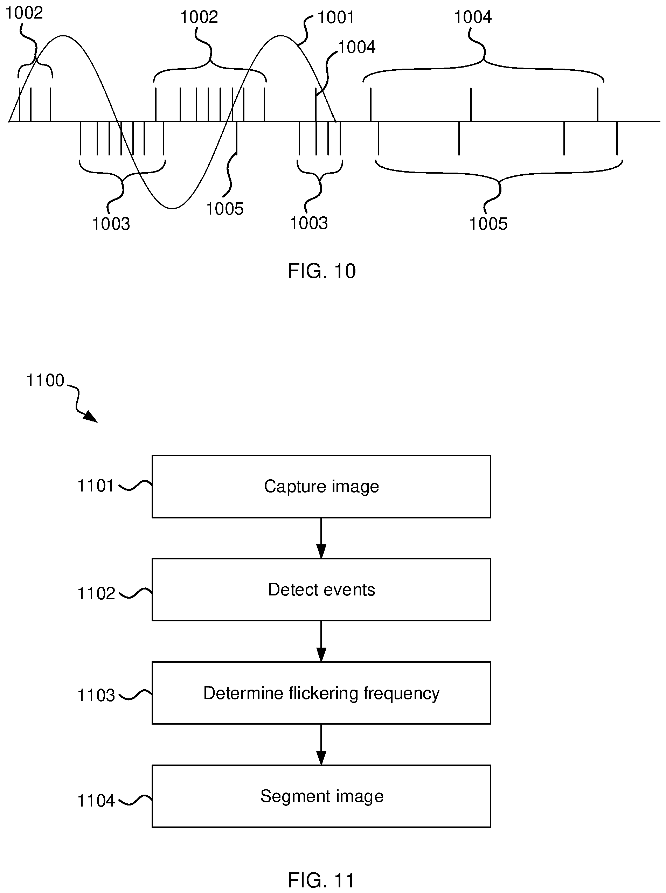

Fig. 10 illustrates a schematic representation of a noisy photocurrent signal and corresponding events according to an embodiment.

The embodiment of Fig. 10 may correspond to a noisier situation compared to the embodiments disclosed above. Due to noise, during a single period of the photocurrent signal 1001, a plurality of events may be triggered in the event camera sensor 103.

For example, as can be seen from the embodiment of Fig. 10, when the photocurrent signal 1001 is increasing, a plurality of positive events 1002 are triggered. Similarly, when the photocurrent signal 1001 is decreasing, a plurality of negative events 1003 are triggered. A positive event may correspond to an increasing brightness and/or positive event polarity and a negative event may correspond to a decreasing brightness and/or negative event polarity.

Due to noise, events may be triggered also when the brightness does not change. For example, in the embodiment of Fig. 10, even when the photocurrent signal 1001 does not change, events are triggered. When the photocurrent signal 1001 is substantially zero, positive noise events 1004 and negative noise events 1005 can be observed in the embodiment of Fig. 10. Further, when the signal 1001 is increasing, negative noise events 1005 can be observed, and when the signal 1001 is decreasing, positive noise events 1004 can be observed.

The computing unit 101 may be configured to filter the events in order to remove noise events. Alternatively, the computing unit 101 may use some other procedure, such as machine learning, in order to reduce the effect of the noise events when determining the one or more flickering frequencies.

Fig. 11 illustrates a flow chart representation of a method 1100 according to an embodiment.

According to an embodiment, the method 1100 comprises capturing 1101 an image of a target area.

The method 1100 may further comprise detecting 1102 one or more events in the target area, wherein each event of the one or more events corresponds to a temporal change of illuminance in a location within the target area.

The method 1100 may further comprise determining 1103 a spatial distribution of one or more flickering frequencies in the target area based on the one or more detected events. The method 1100 may further comprise segmenting 1104 the image into two or more sections based on the spatial distribution of the one or more flickering frequencies within the target area.

According to an embodiment, the one or more events in the target area are detected asynchronously.

According to an embodiment, an event of the one or more events is detected in response to a temporal change of illuminance being greater than a preconfigured temporal contrast threshold in the location of the event.

According to an embodiment, the method 1100 further comprises determining one or more lighting source types in the target area and a location of the one or more lighting source types based on the one or more flickering frequencies and segmenting the image into the two or more sections based on the one or more determined lighting source types.

According to an embodiment, the determining the one or more lighting source types in the target area based on the one or more flickering frequencies comprises comparing the one or more flickering frequencies to one or more preconfigured frequency values.

According to an embodiment, the method 1100 further comprises storing the image and information indicating the segmentation of the image into a memory.

The method 1100 may be performed by the device 100. For example, the optical camera sensor 102 may be configured to perform the operation 1101. Additionally or alternatively, the event camera sensor 103 may be configured to perform the operation 1102. Additionally or alternatively, the computing unit 101 may be configured to perform the operations 1103, 1104.

At least some operations of the method 1100 may be performed by a computer program product when executed on a computer.

Although some of the subject matter has been described in language specific to structural features and/or acts, it is to be understood that the subject matter defined in the appended claims is not necessarily limited to the specific features or acts described above. Rather, the specific features and acts described above are disclosed as embodiments of implementing the claims and other equivalent features and acts are intended to be within the scope of the claims.

The functionality described herein can be performed, at least in part, by one or more computer program product components such as software components. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Graphics Processing Units (GPUs).

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items. The term 'and/or' may be used to indicate that one or more of the cases it connects may occur. Both, or more, connected cases may occur, or only either one of the connected cases may occur.

The operations of the methods described herein may be carried out in any suitable order, or simultaneously where appropriate. Additionally, individual blocks may be deleted from any of the methods without departing from the objective and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, embodiments and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of the appended claims.

## Claims

1. A device (100) comprising:
an optical camera sensor (102), configured to:
capture an image (401) of a target area;
an event camera sensor (103), configured to:
detect one or more events in the target area, wherein each event of the one or more events corresponds to a temporal change of illuminance being greater than a preconfigured temporal contrast threshold in a location within the target area; and
a computing unit (101) coupled to the optical camera sensor and to the event camera sensor, configured to:
determine one or more lighting source types in the target area based on one or more flickering frequencies by comparing the one or more flickering frequencies to one or more preconfigured frequency values, and determine a location of the one or more lighting source types based on the one or more flickering frequencies, wherein the one or more flickering frequencies are proportional to a temporal distribution of the one or more events;
**characterized in that** the computing unit is further configured to segment the image into two or more sections (501, 502) corresponding to the location of the one or more determined lighting source types; and
the device further comprises
a memory coupled to the computing unit, wherein the computing unit is further configured to store the image and information indicating the segmentation of the image into the memory.

2. The device (100) according to claim 1, wherein the event camera sensor is configured to detect the one or more events in the target area asynchronously.

3. A method (1100), comprising:
capturing (1101) an image of a target area;
detecting (1102) one or more events in the target area, wherein each event of the one or more events corresponds to a temporal change of illuminance being greater than a preconfigured temporal contrast threshold in a location within the target area;
determining (1003) one or more lighting source types in the target area based on one or more flickering frequencies by comparing the one or more flickering frequencies to one or more preconfigured frequency values, and a location of the one or more lighting source types based on the one or more flickering frequencies, wherein the one or more flickering frequencies are proportional to a temporal distribution of the one or more events;
**characterized by**
segmenting (1104) the image into the two or more sections corresponding to the location of the one or more determined lighting source types; and
storing the image and information indicating the segmentation of the image into a memory.

4. The method (1100) according to claim 3, wherein the one or more events in the target area are detected asynchronously.

5. A computer program product comprising program code configured to perform the method according to claim any of claims 3 to 4 when the computer program product is executed on a computer.

## Patentansprüche

1. Vorrichtung (100), die umfasst:
einen optischen Kamerasensor (102), der konfiguriert ist zum:
Aufnehmen eines Bildes (401) eines Zielgebiets;
einen Ereigniskamerasensor (103), der konfiguriert ist zum:
Erfassen eines oder mehrerer Ereignisse in dem Zielgebiet, wobei jedes Ereignis des einen oder der mehreren Ereignisse einer zeitlichen Änderung der Beleuchtungsstärke entspricht, die an einer Position innerhalb des Zielgebiets größer als eine vorkonfigurierte zeitliche Kontrastschwelle ist; und
eine Rechnereinheit (101), die an den optischen Kamerasensor und an den Ereigniskamerasensor gekoppelt ist, die konfiguriert ist zum:
Bestimmen einer oder mehrerer Lichtquellenarten in dem Zielgebiet basierend auf einer oder mehreren Flackerfrequenzen durch Vergleichen der einen oder der mehreren Flackerfrequenzen mit einem oder mehreren vorkonfigurierten Frequenzwerten, und Bestimmen einer Position der einen oder der mehreren Lichtquellenarten basierend auf der einen oder den mehreren Flackerfrequenzen, wobei die eine oder die mehreren Flackerfrequenzen proportional zu einer zeitlichen Verteilung des einen oder der mehreren Ereignisse sind;
**dadurch gekennzeichnet, dass** die Rechnereinheit ferner konfiguriert ist, um das Bild entsprechend der Position der einen oder der mehreren bestimmten Lichtquellenarten in zwei oder mehr Abschnitte (501, 502) zu segmentieren; und
die Vorrichtung ferner einen Speicher umfasst, der an die Rechnereinheit gekoppelt ist, wobei die Rechnereinheit ferner konfiguriert ist, um das Bild und Informationen, die die Segmentierung des Bildes angeben, in dem Speicher zu speichern.

2. Vorrichtung (100) nach Anspruch 1, wobei der Ereigniskamerasensor konfiguriert ist, um das eine oder die mehreren Ereignisse in dem Zielgebiet asynchron zu erfassen.

3. Verfahren (1100), das umfasst:
Aufnehmen (1101) eines Bildes eines Zielgebiets;
Erfassen (1102) eines oder mehrerer Ereignisse in dem Zielgebiet, wobei jedes Ereignis des einen oder der mehreren Ereignisse einer zeitlichen Änderung der Beleuchtungsstärke entspricht, die an einer Position innerhalb des Zielgebiets größer als eine vorkonfigurierte zeitliche Kontrastschwelle ist;
Bestimmen (1003) einer oder mehrerer Lichtquellenarten in dem Zielgebiet basierend auf einer oder mehreren Flackerfrequenzen durch Vergleichen der einen oder der mehreren Flackerfrequenzen mit einem oder mehreren vorkonfigurierten Frequenzwerten, und einer Position der einen oder der mehreren Lichtquellenarten basierend auf der einen oder den mehreren Flackerfrequenzen, wobei die eine oder die mehreren Flackerfrequenzen proportional zu einer zeitlichen Verteilung des einen oder der mehreren Ereignisse sind;
**gekennzeichnet durch**
Segmentieren (1104) des Bildes in die zwei oder mehr Abschnitte entsprechend der Position des einen oder der mehreren bestimmten Lichtquellenarten; und
Speichern des Bildes und von Informationen, die die Segmentierung des Bildes angeben, in einem Speicher.

4. Verfahren (1100) nach Anspruch 3, wobei das eine oder die mehreren Ereignisse in dem Zielgebiet asynchron erfasst werden.

5. Computerprogrammprodukt, das einen Programmcode umfasst, der konfiguriert ist, um das Verfahren nach einem der Ansprüche 3 bis 4 durchzuführen, wenn das Computerprogrammprodukt auf einem Computer ausgeführt wird.

## Revendications

1. Dispositif (100) comprenant :
un capteur de caméra optique (102), configuré pour :
capturer une image (401) d'une zone cible ;
un capteur de caméra d'événement (103), configuré pour :
détecter un ou plusieurs événements dans la zone cible, dans lequel chaque événement du ou des événements correspond à un changement temporel d'éclairement supérieur à un seuil de contraste temporel préconfiguré dans un emplacement au sein de la zone cible ; et
une unité de calcul (101) couplée au capteur de caméra optique et au capteur de caméra d'événement, configurée pour :
déterminer un ou plusieurs types de sources d'éclairage dans la zone cible sur la base d'une ou de plusieurs fréquences de scintillement en comparant la ou les fréquences de scintillement à une ou plusieurs valeurs de fréquence préconfigurées, et déterminer un emplacement du ou des types de sources d'éclairage sur la base de la ou des fréquences de scintillement, dans lequel la ou les fréquences de scintillement sont proportionnelles à une répartition temporelle du ou des événements ;
**caractérisé en ce que** l'unité de calcul est en outre configurée pour segmenter l'image en deux sections (501, 502) ou plus correspondant à l'emplacement du ou des types de sources d'éclairage déterminés ; et
le dispositif comprend en outre une mémoire couplée à l'unité de calcul, dans lequel l'unité de calcul est en outre configurée pour stocker l'image et des informations indiquant la segmentation de l'image dans la mémoire.

2. Dispositif (100) selon la revendication 1, dans lequel le capteur de caméra d'événement est configuré pour détecter le ou les événements dans la zone cible de manière asynchrone.

3. Procédé (1100), comprenant :
la capture (1101) d'une image d'une zone cible ;
la détection (1102) d'un ou de plusieurs événements dans la zone cible, dans lequel chaque événement du ou des événements correspond à un changement temporel d'éclairement supérieur à un seuil de contraste temporel préconfiguré dans un emplacement au sein de la zone cible ;
la détermination (1003) d'un ou de plusieurs types de sources d'éclairage dans la zone cible sur la base d'une ou de plusieurs fréquences de scintillement en comparant la ou les fréquences de scintillement à une ou plusieurs valeurs de fréquence préconfigurées, et d'un emplacement du ou des types de sources d'éclairage sur la base de la ou des fréquences de scintillement, dans lequel la ou les fréquences de scintillement sont proportionnelles à une répartition temporelle du ou des événements ;
**caractérisé par**
la segmentation (1104) de l'image en deux sections ou plus correspondant à l'emplacement du ou des types de sources d'éclairage déterminés ; et
le stockage de l'image et des informations indiquant la segmentation de l'image dans une mémoire.

4. Procédé (1100) selon la revendication 3, dans lequel le ou les événements dans la zone cible sont détectés de manière asynchrone.

5. Produit-programme d'ordinateur comprenant un code de programme configuré pour réaliser le procédé selon l'une quelconque des revendications 3 à 4 lorsque le produit-programme d'ordinateur est exécuté sur un ordinateur.
